Europäisches Patentamt

European Patent Office

Office européen des brevets

(19)

(11) Numéro de publication : **0 388 255 B1**

(12) **FASCICULE DE BREVET EUROPEEN**

(45) Date de publication du fascicule du brevet :
**11.05.94 Bulletin 94/19**

(51) Int. Cl.[5] : **C21C 7/00,** F27D 3/16,
B22D 1/00

(21) Numéro de dépôt : **90400619.4**

(22) Date de dépôt : **08.03.90**

(54) **Four électrique à arc et procédé de fusion de ferrailles.**

(30) Priorité : **15.03.89 FR 8903381**

(43) Date de publication de la demande :
**19.09.90 Bulletin 90/38**

(45) Mention de la délivrance du brevet :
**11.05.94 Bulletin 94/19**

(84) Etats contractants désignés :
**AT BE CH DE DK ES FR GB GR IT LI LU NL SE**

(56) Documents cités :
**EP-A- 0 059 289
DE-A- 3 240 097
DE-A- 3 444 513
DE-C- 3 523 171
GB-A- 2 192 446
Norme DIN 51058
Patent Abstracts of Japan, vol. 9, no. 125
(C-283)(1848), 30 Mai 1985; & JP-A-6013015
(Shin Nippon Seitetsu K.K.) 23-01-1985**

(73) Titulaire : **L'AIR LIQUIDE, SOCIETE ANONYME
POUR L'ETUDE ET L'EXPLOITATION DES
PROCEDES GEORGES CLAUDE
75, Quai d'Orsay
F-75321 Paris Cédex 07 (FR)**
Titulaire : **Veitsch-Radex Aktiengesellschaft
für feuerfeste Erzeugnisse
Schubertring 10-12
A-1010 Wien (AT)**

(72) Inventeur : **Lepoutre, Etienne
52 ter, rue Aristide Briand
F-92300 Levallois Perret (FR)**
Inventeur : **Devaux, Michel
45 avenue de Chevincourt, Cressely
F-78470 Magny-Les-Hameaux (FR)**
Inventeur : **Hirschberg, Bruno
Erlgasse 40
A-1120 Wien (AT)**
Inventeur : **Petio, Franz Adolf
Angerweg 32
A-8650 Kindberg (AT)**
Inventeur : **Weitzer, Paul
Berggasse 4
A-1090 Wien (AT)**

(74) Mandataire : **Vesin, Jacques et al
L'AIR LIQUIDE, SOCIETE ANONYME POUR
L'ETUDE ET L'EXPLOITATION DES
PROCEDES GEORGES CLAUDE 75, quai
d'Orsay
F-75321 Paris Cédex 07 (FR)**

EP 0 388 255 B1

## Description

La présente invention se rapporte au traitement de métaux en fusion par un gaz dans les fours électriques à arc, du genre comprenant une cuve garnie d'un revêtement intérieur en matériau réfractaire, appelé sole, des parois latérales, une voûte coiffant l'ouverture supérieure de la cuve à travers laquelle sont ménagés des orifices de passage des électrodes, un bec de coulée ou trou de coulée excentré, la sole étant équipée d'au moins un dispositif d'injection de gaz en vue de brasser le métal en fusion.

Un four à arc de ce type est décrit dans le document GB-A-2.192.446.

Il est usuel d'utiliser un gaz pour assurer l'agitation du métal en fusion.

On utilise couramment dans les poches d'acier en fusion des dispositifs d'injection de gaz inerte par le fond. Dans ce cas, l'utilisation de gaz inerte permet une meilleure homogénéisation de l'acier liquide, dans sa composition chimique et en température. De même, dans les convertisseurs à soufflage d'oxygène par le haut, et à soufflage de gaz inerte par le fond, le brassage par gaz est utilisé en particulier pour homogénéiser le métal en fusion et pour accélérer les réactions chimiques entre métal et laitier.

La fusion de ferrailles au four électrique à arc présente plusieurs inconvénients qui sont, entre autres :

- l'énergie fournie par les arcs électriques est absorbée surtout dans la zone des électrodes et dans la partie haute du bain métallique, ce qui provoque une distribution non uniforme de la température du bain métallique. Cette distribution non uniforme conduit à une augmentation de l'énergie électrique consommée pour fondre l'acier localisé dans les zones les plus froides ;
- dans le four à arc, le bain d'acier liquide a une faible hauteur et s'étend sur une grande surface, ce qui favorise l'obtention d'une composition chimique hétérogène de l'acier liquide ;
- le soufflage d'oxygène pendant les périodes de fusion ou d'affinage provoque une suroxydation du fer à la surface du bain métallique ;
- les réactions chimiques entre métal et laitier se produisent surtout à la surface du bain métallique et ne sont pas favorisées par les faibles mouvements de l'acier liquide.

Il est habituellement reconnu que ces inconvénients peuvent être minimisés par le brassage de l'acier par le fond du four à arc.

On connaît plusieurs dispositifs de brassage de l'acier en fusion. Dans un procédé connu, on met en mouvement l'acier liquide dans une poche en introduisant un gaz inerte par le fond au moyen d'un réfractaire poreux. Ce procédé utilise une brique réfractaire ou bouchon poreux ayant la propriété d'être perméable au gaz sous pression mais imperméable au métal en fusion. Le bouchon poreux constitue une partie du garnissage réfractaire de la poche. Il est placé de manière à être recouvert de métal liquide lorsque la poche est remplie. Le brassage est obtenu par injection de gaz à travers le bouchon poreux ou la brique réfractaire.

Jusqu'à maintenant, la mise en oeuvre de cette technique au four à arc ne s'est pas développée industriellement car l'espérance de vie (au plus 40 cycles en continu) des bouchons poreux, ou briques réfractaires est insuffisante compte tenu des contraintes d'exploitation du four à arc qui ne permettent pas le remplacement du dispositif d'injection de gaz sans perte de productivité.

Dans un autre procédé connu, le convertisseur à soufflage d'oxygène par le haut, le brassage du métal en fusion avec un gaz inerte est assuré à l'aide d'un dispositif composé d'une masse en réfractaire non poreux présentant des discontinuités locales s'étendant sur toute sa hauteur dans la direction du soufflage gazeux et permettant le passage du gaz. Jusqu'à maintenant, ces dispositifs de brassage de métal en fusion ne se sont pas développés de façon significative au four à arc à cause de contraintes spécifiques au four à arc. En effet, les contraintes thermiques dans le réfractaire de la soie du four à arc sont accentuées par la faible épaisseur de la soie par rapport à un fond de convertisseur. De plus, lorsque la coulée de l'acier liquide s'effectue au travers d'un trou de coulée excentré, il subsiste couramment dans le four, un reste de métal liquide, ou pied de bain, qui occulte le débouché des dispositifs d'injection et n'en permet pas l'inspection. Ces inconvénients sont encore accrus dans le four à arc par l'importance des mouvements de gaz et de métal liquide formant, avec la chute des ferrailles lors des chargements, d'importantes contraintes mécaniques. En outre, il existe une érosion chimique du réfractaire de la soie du four à arc résultant de réactions chimiques entre réfractaire, métal liquide et laitier. Toutes ces raisons font que les techniques de brassage par gaz inerte du convertisseur n'ont pu être appliquées directement au four à arc.

Il existe également une technique de brassage de l'acier liquide au four à arc grâce à un effet électromagnétique. Ce procédé est mis en oeuvre au moyen d'un dispositif placé sous la cuve du four à arc. Il présente l'inconvénient d'être limité en puissance de brassage et d'être coûteux en investissement.

Le procédé décrit dans le document GB-A-2.192.446 susmentionné permet le brassage de l'acier liquide par le fond du four à arc grâce à un dispositif d'injection comprenant une brique en matériau réfractaire traversée par des petits tubes s'étendant sur toute sa longueur dans la direction du soufflage. Dans ce dispositif, les petits tubes métalliques sont en contact direct avec le métal liquide lors d'un cycle de fusion au four à arc, ce qui ne permet pas d'isoler électriquement l'enceinte métallique du four de la masse de métal en fusion sans l'adjonction d'un système d'isolation électrique particulier au dispositif d'injection. De plus, lorsque le dispositif d'injection est endommagé, son remplacement est nécessaire et ne peut se faire que pendant une période d'arrêt du four électrique, ce qui cause une perte de productivité.

Un autre procédé, décrit dans le document EP-A-0.240.998, permet le brassage de l'acier liquide par le fond du four à arc à l'aide de tuyères. Dans ce procédé, il n'est pas possible d'arrêter et de remettre en service le gaz au milieu d'un cycle.

La présente invention a pour objet l'amélioration de la technique d'injection de gaz par le fond du four à arc en minimisant les risques de percée de la sole et en permettant, lorsque le dispositif d'injection de gaz est usé, une remise en état rapide des dispositifs, sans obligation de refroidissement de la sole du four et sans perte de productivité. Un autre objectif de cette invention est de permettre une isolation électrique simple et naturelle entre le métal en fusion et la carcasse métallique.

Ces objectifs sont atteints, selon l'invention, en ce que le dispositif d'injection de gaz comprend un injecteur bas formé d'un bloc compact de matériau réfractaire dense et non perméable au gaz, traversé par un ou une pluralité de tubes métalliques creux ou de fentes, ou de canaux, s'étendant sur toute sa hauteur dans la direction de soufflage gazeux et permettant le passage du gaz, ledit injecteur bas étant surmonté d'une masse de pisé poreux d'une épaisseur initiale de 50 à 300 mm, composé de matériau réfractaire, non façonné, sous forme de grains d'un diamètre maximal de 10 mm, la granulométrie du pisé poreux étant telle que la masse de pisé poreux a une perméabilité comprise entre 100 et 300 nanoperm, après Frittage à la chaleur.

L'unité nanoperm est définie comme suit :

$$1 \text{ nanoperm} = 3{,}08 \times \frac{1 \, h \times V}{A \times \Delta p \times g}$$

h    étant la hauteur en centimètre de matériau traversé par le gaz,

V    étant le volume en $cm^3$ du gaz traversant la surface A (en $cm^2$) de matériau poreux pendant une durée g (exprimée en minutes),

$\Delta p$    étant la différence de pression exprimée en cm d'eau d'une colonne d'eau entre la pression du gaz à l'entrée de la surface poreuse et à la sortie de la surface poreuse.

Grâce à sa structure composite formée d'un injecteur bas surmonté d'une masse de pisé poreux imperméable au métal liquide, on évite que le métal en fusion ne vienne en contact avec les tubes métalliques creux ou les canaux ou les fentes de l'injecteur bas. L'imperméabilité du pisé poreux au métal liquide évite ainsi tout bouchage ou infiltration de métal liquide qui pourrait se produire en cas d'interruption, même brève, de l'alimentation en gaz de brassage sous pression. De cette manière, l'usure de l'injecteur bas, qu'elle soit d'origine thermique, chimique ou mécanique, est supprimée. De plus, la réfection du pisé poreux peut être effectuée sans problème, sans attendre le refroidissement de la sole du four à arc et en un temps très bref. La section des tubes ou analogues est comprise de préférence entre 0,12 et 500 $mm^2$.

Cette réfection est effectuée par application d'une masse de pisé poreux, du même type que le pisé poreux initial, au-dessus de l'injecteur bas. Cette masse de pisé poreux permet, après frittage à la chaleur sans passage de gaz, le passage de gaz sous pression jusqu'au débit désiré. En général, la pression d'alimentation du dispositif d'injection est comprise entre 1 et 10 x $10^5$ Pa (1 et 10 bars). En outre, lorsque le brassage continu n'est pas nécessaire, on peut stopper l'injection de gaz, ce qui peut représenter une amélioration du point de vue économique et surtout un facteur de sécurité déterminant en cas d'arrêt intempestif de l'alimentation en gaz.

Selon une forme de réalisation, l'injecteur bas, faisant corps latéralement avec le réfractaire de la sole, s'étend à distance en-dessous de la face interne de la sole et est en contact avec une masse de pisé poreux s'étendant jusqu'au niveau interne de la paroi de sole.

L'invention a également pour objet un procédé de fusion de ferrailles mettant en oeuvre une injection de gaz inerte dans le métal en fusion contenu dans un four électrique à arc, dont la sole comporte au moins un dispositif d'injection de gaz inerte, caractérisé en ce que le gaz est envoyé dans le métal en fusion en passant d'abord par un injecteur bas implanté dans le réfractaire de la sole, puis au travers d'une couche de pisé poreux d'épaisseur initiale entre 50 et 300 mm, composé de matériau réfractaire non façonné formé de grains d'un diamètre maximum de 10 mm et permettant le passage de gaz sous une pression d'alimentation d'au plus 10 x $10^5$ Pa (10 bars) à un débit d'au moins 20 $Nm^3$/h après frittage à la chaleur, et en ce que l'injecteur bas est formé d'un bloc compact en matériau réfractaire dense et non poreux traversé par un ou des tubes métalliques creux ou fentes ou canaux s'étendant sur toute sa hauteur, cet injecteur étant surmonté par la couche de pisé poreux.

Le gaz inerte peut être de l'argon et/ou de l'azote, et/ou du dioxyde de carbone et/ou de l'hélium.

Les caractéristiques et avantages de l'invention ressortiront d'ailleurs de la description qui suit, en référence aux figures annexées.

3

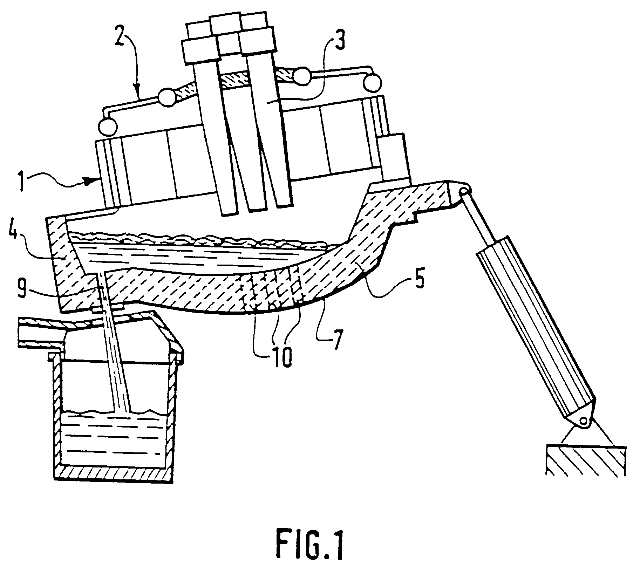

La figure 1 décrit un four électrique à arc de fusion de ferrailles comprenant :
- une cuve (7) garnie d'un revêtement intérieur en matériau réfractaire (8), ledit revêtement étant appelé sole (5),
- des parois latérales (4),
- une voûte (2) coiffant l'ouverture supérieure de la cuve (7), à travers laquelle sont ménagés des orifices de passage des électrodes (3),
- un trou de coulée excentré (9) qui peut être remplacé par un bec de coulée.

La sole (5) du four est équipée d'un ou de plusieurs dispositifs d'injection de gaz de brassage (10). Chaque dispositif d'injection (10) est positionné de manière à augmenter l'efficacité du brassage.

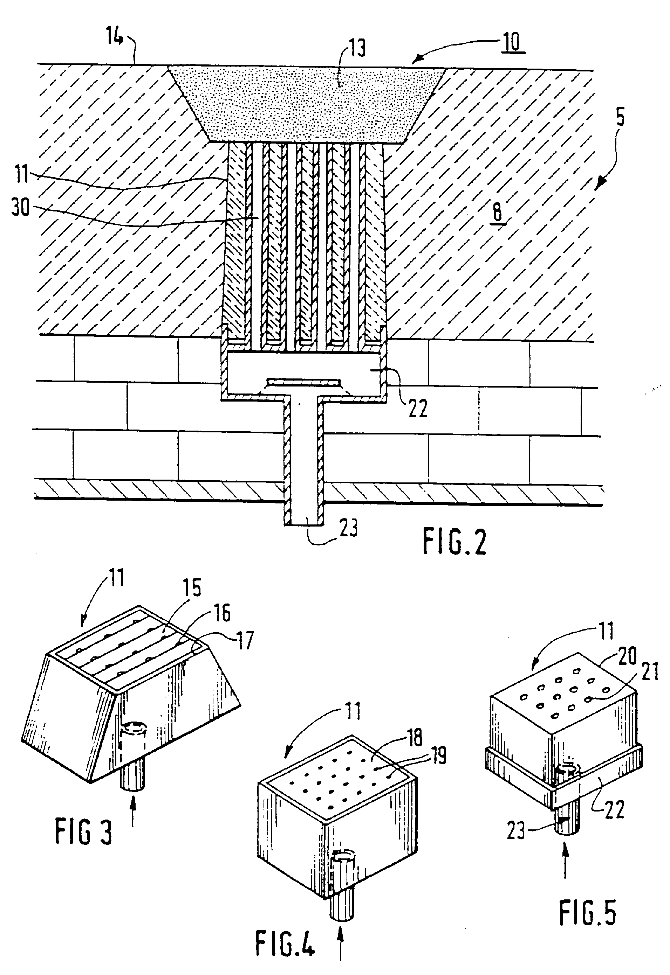

La figure 2 décrit un des dispositifs d'injection (10) de la figure 1.

Le dispositif de brassage est constitué d'un injecteur bas (11) formé d'un bloc compact fait de matériau réfractaire dense et non perméable au gaz, traversé par une pluralité de tubes métalliques creux ou de fentes, ou de canaux (30), s'étendant sur toute sa hauteur et permettant le passage du gaz, ledit injecteur bas (11) étant surmonté d'une masse de pisé poreux (13) d'une épaisseur initiale de 50 à 300 mm, ledit pisé poreux (13) étant composé de matériau réfractaire non façonné, et formé de grains d'un diamètre maximal de 10 mm de façon à obtenir une perméabilité comprise entre 100 et 300 nanoperm après frittage à la chaleur. La porosité de la masse de pisé poreux est telle qu'après frittage à la chaleur, il est possible d'injecter un gaz jusqu'au débit de 20 Nm³/h avec une pression d'alimentation n'excédant pas $10 \times 10^5$ Pa. La hauteur de l'injecteur bas (11) est inférieure à l'épaisseur de la paroi de sole.

L'injecteur bas (11) s'étend à distance en dessous de la face interne (14) de la sole (5) et est en contact avec la masse de pisé poreux (13) s'étendant jusqu'au niveau interne de la sole (5). Selon cette forme de réalisation, l'injecteur bas fait corps latéralement avec le réfractaire de la sole (5).

L'injecteur bas (11) composant la partie inférieure du dispositif d'injection peut se présenter sous plusieurs formes de réalisation.

Les figures 3,4 et 5 décrivent différents types d'injecteurs bas (11) pouvant composer la partie basse du dispositif d'injection (10).

La figure 3 décrit un injecteur bas (11) constitué d'un assemblage de plaques verticales en matériau réfractaire dense et non poreux (15), séparées par des fentes d'épaisseur 0,1 à 1mm (16) permettant le passage de gaz sous pression dans la direction de soufflage. Selon une autre version d'injecteur bas (11), les plaques en matériau réfractaire présentent, sur leur grande face, des cannelures superficielles, qui forment, une fois les plaques assemblées, des canaux rectilignes permettant le passage de gaz sous pression dans la direction de soufflage. L'injecteur bas (11) comporte dans les deux cas précités, une enveloppe métallique (17) qui forme une enceinte étanche au gaz et assure le maintient des différentes pièces.

La figure 4 décrit une variante d'injecteur bas (11) constitué d'un bloc compact fait de matériau réfractaire dense, non poreux (18), de section appropriée, dans lequel ont été ménagés une pluralité de fins canaux (19) (entre 4 et 50) d'un diamètre compris entre 0,5 et 3 mm, dans le sens de l'écoulement du gaz. Dans cette variante, une chemise métallique forme une enceinte étanche au gaz.

La figure 5 décrit une autre variante d'injecteur bas (11) : cet injecteur bas (11) est constitué d'un bloc de matériau réfractaire dense et non poreux (20), de section appropriée, traversé, sur toute sa hauteur, dans le sens d'écoulement du gaz par au moins un et au plus 50 tubes métalliques (21) creux de section intérieure comprise entre 0,12 mm² et 500 mm². Selon cette variante, les tubes métalliques creux (21) sont raccordés à leur extrémité inférieure à des ouvertures d'une boite distributrice de gaz (22) équipée centralement d'un tube d'alimentation (23) en gaz de brassage. Le cas échéant, l'injecteur bas (11) de la figure 5 peut comporter une enveloppe métallique formant une enceinte autour de l'injecteur bas (11) ladite enceinte s'étendant sur toute ou, partie de la longueur de l'injecteur bas (11) dans la direction de soufflage.

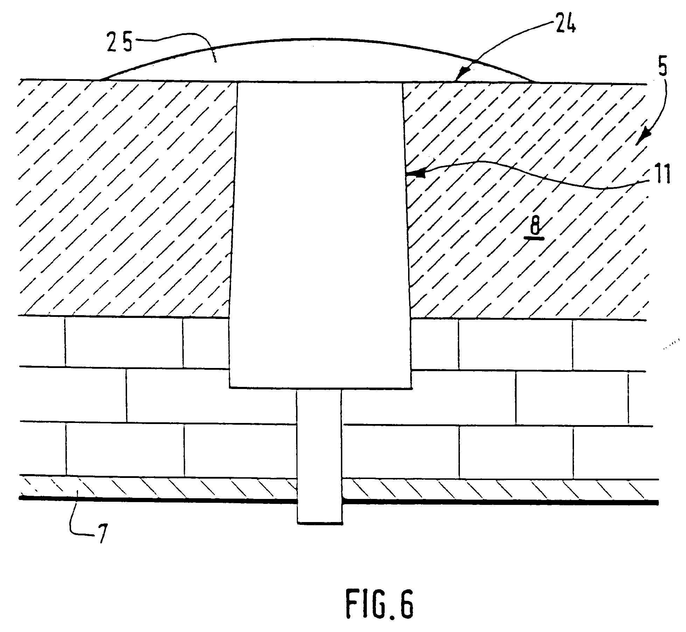

La figure 6 représente une variante du dispositif d'injection (10) décrit dans la figure 2. Selon cette variante, l'injecteur bas (11) s'étend axialement sur toute l'épaisseur de la sole (5) et fait corps latéralement avec le réfractaire (8) de la sole (5). Selon cette variante, l'injecteur bas débouche au niveau de la paroi interne de la sole (24) et la masse de pisé poreux (25) recouvre une partie de la paroi interne (24) de la sole (5) et la totalité de la face supérieure de l'injecteur bas (11).

Exemple de réalisation

Cet exemple de réalisation est décrit à l'aide de la figure 2.

Dans cet exemple, l'injecteur bas (11) comprenant un bloc de réfractaire dense et non poreux composé essentiellement de magnésie (MgO) et de carbone, est traversé par 30 tubes métalliques creux de section circulaire, en acier, de diamètre intérieur 1 mm (30) s'étendant sur toute la longueur du bloc réfractaire.L'injecteur bas (11) est surmonté d'une masse de pisé poreux (13) d'épaisseur initiale 200 mm. Cette épaisseur est calculée de manière à ce que la face supérieure de la masse de pisé poreux soit au même niveau que la face interne (14) de la sole.

Le pisé poreux est un pisé de damage à sec composé de matériau réfractaire non façonné à base de magnésie frittée dont la composition et la taille de grains sont indiquées dans la table ci-dessous. La densité en vrac du pisé poreux est de 2,2 kg/dm³. Pour la mise en oeuvre du dispositif d'injection, l'injecteur bas est positionné en premier dans la sole du four, puis le pisé poreux, sous forme granuleuse sans liant, est appliqué par damage à sec au dessus de l'injecteur bas dans un puits ménagé à cet effet dans la sole du four au dessus de l'injecteur bas. La densité apparente de la couche damée de pisé poreux après séchage à 200°C est d'environ 2,6 kg/dm³. La porosité de la masse de pisé poreux est telle que lorsqu'on alimente l'injecteur bas avec une pression d'au plus 10 bars, le débit de gaz traversant la masse de pisé poreux est d'au moins 20 Nm³/h.

D'une manière générale, la composition chimique du pisé poreux, à base de magnésie frittée, peut être résumée de la manière suivante :

| | Domaine général | Domaine particulier | Exemple de réalisation |
|---|---|---|---|
| MgO % en poids | 50 à 90 | 70 à 80 | 76 |
| $Al_2O_3$ % en poids | 0 à 5 | 0 à 1 | 0,5 |
| $Fe_2O_3$ % en poids | 2 à 7 | 3 à 6 | 5 |
| CaO % en poids | 5 à 20 | 15 à 20 | 17,5 |
| $SiO_2$ % en poids | 0 à 2 | 0 à 1 | 0,6 |
| dimension des grains (en mm) | 0 à 10 mm | 0 à 8 mm | 0 à 5 mm |

La perméabilité de la couche réfractaire, comprise entre 100 et 300 Namoperm est obtenue par une granulation particulière du pisé poreux. Selon un mode préférentiel de réalisation, les tailles de grains seront réparties de la manière suivante :

0 à 0,5 mm : environ 30 % en poids
0,5 mm à 2 mm : environ 30 % en poids
2 mm à 5 mm : environ 40 % en poids

Selon une autre forme de réalisation, la couche protectrice est faite d'un pisé composé de matériau réfractaire, de préférence à base de magnésie frittée, lié au goudron et/ou au brai et/ou à la résine synthétique. Ce pisé offre une meilleure adhérence de la couche. Lors de la mise en oeuvre, le goudron ou le brai ou la résine synthétique sont consumés par le feu laissant des canaux fins par lesquels le gaz peut passer.

## Revendications

1. Four électrique à arc de fusion de ferrailles, du genre comprenant une cuve (7) garnie d'un revêtement intérieur en matériau réfractaire (8) appelé sole du four, des parois latérales (4), une voûte (2) coiffant l'ouverture supérieure de la cuve, à travers laquelle sont ménagés des orifices de passage des électrodes (3), un bec de coulée ou trou de coulée excentré (9), la sole étant équipée d'au moins un dispositif d'injection de gaz (10) en vue de brasser le métal en fusion, caractérisé en ce que ledit dispositif d'injection comporte un injecteur bas (11) formé d'un bloc compact en matériau réfractaire dense et non poreux (15 ; 18 ; 20) traversé par un ou une pluralité, de préférence inférieure à cinquante, de tubes métalliques creux, ou fentes, ou canaux (30 ; 16 ; 19 ; 21) s'étendant sur toute sa hauteur dans la direction du soufflage gazeux et permettant le passage de gaz, ledit injecteur bas étant surmonté d'une masse de pisé poreux (13) d'une épaisseur initiale de 50 à 300 mm, composé de matériau réfractaire non façonné sous forme de grains d'un diamètre maximal de 10 mm, la granulométrie du pisé poreux étant telle que la masse de pisé poreux a une perméabilité comprise entre 100 et 300 nanoperm après frittage à la chaleur.

2. Four électrique selon la revendication 1, caractérisé en ce que la perméabilité de la masse de pisé poreux (13) est telle qu'elle permet un débit d'au moins 20 Nm$^3$/h par dispositif d'injection (10) sous une pression d'alimentation d'au plus 10 x 10$^5$ Pa (10 bars).

3. Four électrique selon la revendication 1 ou la revendication 2, tel que le nombre de dispositifs d'injection (10) n'excède pas six.

4. Four électrique selon l'une des revendications 1 à 3, caractérisé en ce que le pisé poreux (13) est un pisé de damage à sec, de préférence libre de liant, contenant 50 à 90 % en poids de magnésie MgO, 5 à 20 % en poids de chaux CaO, 0 à 5 % en poids d'alumine Al$_2$O$_3$, 0 à 2 % en poids de silice SiO$_2$, 2 à 7 % en poids d'oxyde de fer Fe$_2$O$_3$.

5. Four électrique selon la revendication 4, caractérisé en ce que le pisé poreux contient 70 à 80 % en poids de magnésie MgO, 15 à 20 % en poids de chaux CaO, 0 à 1 % en poids d'alumine Al$_2$O$_3$, 0 à 1 % en poids de silice SiO$_2$, 3 à 6 % en poids d'oxyde de fer Fe$_2$O$_3$.

6. Four électrique selon la revendication 4 ou 5, caractérisé en ce que le pisé poreux (13) a des tailles de grains réparties de la manière suivante :
   - 0 à 0,5 mm : environ 30 % en poids,
   - 0,5 à 2 mm : environ 30 % en poids,
   - 2 à 5 mm : environ 40 % en poids.

7. Four électrique selon l'une des revendications 1 à 3, caractérisé en ce que le pisé poreux (13) est composé d'au moins un matériau réfractaire, de préférence à base de magnésie frittée, et d'un liant constitué essentiellement de goudron et/ou de brai et/ou de résine synthétique.

8. Four électrique selon l'une des revendications précédentes, caractérisé en ce que l'injecteur bas s'étend à distance en-dessous de la face interne de la sole.

9. Four électrique selon la revendication 1, caractérisé en ce que l'injecteur bas (11) s'étend sensiblement jusqu'au niveau de la face interne (24) de la sole (8) en regard de la nappe de recouvrement en pisé poreux (25) débordant largement sur la paroi interne de la sole.

10. Four électrique selon l'une des revendications 1 à 9, caractérisé en ce que l'injecteur bas (11) est constitué d'un assemblage de plaques verticales (15) en réfractaire dense, non poreux, séparées par des fentes (16) d'épaisseur entre 0,1 à 1 mm permettant le passage de gaz sous pression, l'injecteur bas étant entouré d'une enveloppe métallique (17) étanche au gaz.

11. Four électrique selon l'une des revendications 1 à 9, caractérisé en ce que l'injecteur bas (11) est constitué d'un bloc compact (20) fait de matériau réfractaire dense et non poreux traversé sur toute sa hauteur dans la direction de soufflage par au moins un et au plus 50 tubes métalliques creux (21) de section comprise entre 0,12 mm$^2$ et 500 mm$^2$.

12. Four électrique selon l'une des revendications 1 à 9, caractérisé en ce que l'injecteur bas (11) est constitué d'un bloc compact (18) fait de matériau réfractaire dense et non poreux, dans lequel ont été ménagés, dans la direction de soufflage, entre 4 et 50 fins canaux (19) de diamètre compris entre 0,5 et 3 mm.

**13.** Four électrique selon l'une des revendications précédentes, caractérisé en ce que l'injecteur bas (11) fait corps latéralement avec le réfractaire de la sole (8).

**14.** Procédé de fusion de ferrailles mettant en oeuvre une injection de gaz inerte dans le métal en fusion contenu dans un four électrique à arc (1) dont la sole (8) comporte au moins un dispositif d'injection de gaz inerte (11) en vue de brasser le métal en fusion, caractérisé en ce que le gaz est envoyé dans le métal en fusion en passant d'abord par un injecteur bas (11) implanté dans le réfractaire de la sole (8), puis au travers d'une couche de pisé poreux (13) d'épaisseur initiale entre 50 et 300 mm, composé de matériau réfractaire non façonné formé de grains d'un diamètre maximum de 10 mm et permettant le passage de gaz sous une pression d'alimentation d'au plus $10 \times 10^5$ Pa (10 bars) à un débit d'au moins 20 Nm³/h après frittage à la chaleur, et en ce que l'injecteur bas est formé d'un bloc compact en matériau réfractaire dense et non poreux (15 ; 18 ; 20) traversé par un ou des tubes métalliques creux ou fentes ou canaux (30 ; 16 ; 19 21) s'étendant sur toute sa hauteur, cet injecteur étant surmonté par la couche de pisé poreux.

**15.** Procédé selon la revendication 14, caractérisé en ce que le gaz inerte est choisi parmi l'argon et/ou l'azote et/ou le dioxyde de carbone et/ou l'hélium, seuls ou en mélange.

**16.** Procédé selon la revendication 14 ou 15, caractérisé en ce que lorsque la masse de pisé poreux (13) est usée, une réparation du dispositif d'injection est réalisée par application de pisé poreux au-dessus du dispositif d'injection (10), sans arrêt du four électrique et sans laisser refroidir la sole du four.

**17.** Procédé selon la revendication 14, caractérisé par une absence de contact d'une partie métallique du dispositif d'injection (10), avec le métal liquide, lors de la marche normale du four électrique à arc.

**18.** Procédé selon l'une des revendications 14 à 17, caractérisé en ce qu'on stoppe et redémarre l'injection de gaz à travers les dispositifs d'injection (10) pour brasser le métal en fusion, à tout moment pendant la marche normale du four, sans boucher ni endommager les dispositifs d'injection de gaz.

**19.** Application du four selon l'une des revendications 1 à 13 et/ou du procédé selon l'une des revendications 14 à 18 à la fusion d'acier.

## Patentansprüche

**1.** Lichtbogenofen zum Schmelzen von Schrott mit einer als Ofensohle bezeichneten Wanne (7) mit einer inneren Auskleidung aus einem feuerfesten Material (8), Seitenwänden (4), einem die obere Öffnung der Wanne bedeckenden gewölbten Deckel (2), der von Durchgangsöffnungen für Elektroden (3) durchquert wird, und mit einer Gießrinne oder einem exzentrischen Gießloch (9), wobei die Sohle mindestens eine Gasinjektionsvorrichtung (10) zum Durchmischen des geschmolzenen Metalls umfaßt, dadurch gekennzeichnet, daß die Injektionsvorrichtung einen unteren Injektor (11) aufweist, der aus einem kompakten Block (15, 18, 20) aus dichtem und nicht porösem, feuerfestem Material besteht, der von einer oder von einer Vielzahl, vorzugsweise weniger als fünfzig, metallischen Hohlröhren, oder Spalten oder Kanälen (30, 16, 19, 21) durchzogen ist, die sich längs seiner ganzen Höhe in der Gaseinblasrichtung erstrecken und den Durchgang des Gases ermöglichen, wobei der untere Injektor von einer porösen Stampfmasse (13) mit einer Anfangsdicke von 50 bis 300 mm abgedeckt ist, die aus feuerfesten, unbearbeiteten Körnern mit einem maximalen Durchmesser von 10 mm besteht, wobei die Körnung der porösen Stampfung derart ist, daß die poröse Stampfmasse eine Durchlässigkeit von 100 bis 300 nanoperm nach dem Wärmesintern hat.

**2.** Lichtbogenofen nach Anspruch 1, dadurch gekennzeichnet, daß die Durchlässigkeit der porösen Stampfmasse (13) einen Durchfluß von mindestens 20 Nm³/h durch die Injektionsvorrichtung (10) bei einem Versorgungsdruck von höchstens $10 \times 10^5$ Pa (10 bar) ermöglicht.

**3.** Lichtbogenofen nach Anspruch 1 oder 2, in dem die Anzahl der Injektionsvorrichtungen nicht größer als sechs ist.

4. Lichtbogenofen nach den Ansprüchen 1 bis 3, dadurch gekennzeichnet, daß die poröse Stampfung (13) eine Trockenstampfung ist, vorzugsweise frei von Bindemitteln, die 50 bis 90% Gewichtsanteile Magnesiumoxid MgO, 5 bis 20% Gewichtsanteile Kalziumoxid CaO, 0 bis 5% Gewichtsanteile Aluminiumoxid $Al_2O_3$, 0 bis 2% Gewichtsanteile Siliziumoxid $SiO_2$ und 2 bis 7% Gewichtsanteile Eisenoxid $Fe_2O_3$ enthält.

5. Lichtbogenofen nach Anspruch 4, dadurch gekennzeichnet, daß die poröse Stampfung 70 bis 80% Gewichtsanteile Magnesiumoxid MgO, 15 bis 20% Gewichtsanteile Kalziumoxid CaO, 0 bis 1% Gewichtsanteile Aluminiumoxid $Al_2O_3$, 0 bis 1% Gewichtsanteile Siliziumoxid $SiO_2$ und 3 bis 6% Gewichtsanteile Eisenoxid $Fe_2O_3$ enthält.

6. Lichtbogenofen nach Anspruch 4 oder 5, dadurch gekennzeichnet, daß die poröse Stampfung (13) die in folgender Weise verteilten Korngrößen aufweist:
   - 0 bis 0,5 mm: ungefähr 30% Gewichtsanteile,
   - 0,5 bis 2 mm: ungefähr 30% Gewichtsanteile.
   - 2 bis 5 mm : ungefähr 40% Gewichtsanteile.

7. Lichtbogenofen nach den Ansprüchen 1 bis 3, dadurch gekennzeichnet, daß die poröse Stampfung (13) aus mindestens einem feuerfesten Material, vorzugsweise auf der Grundlage von gesintertem Magnesiumoxid, und einem Bindemittel besteht, das im wesentlichen aus Teer, und/oder Pech und/oder einem synthetischen Harz besteht.

8. Lichtbogenofen nach eienm der vorangegangenen Ansprüche, dadurch gekennzeichnet, daß der untere Injektor sich mit einem Abstand unterhalb der inneren Oberfläche der Sohle erstreckt.

9. Lichtbogenofen nach dem Anspruch 1, dadurch gekennzeichnet, daß der untere Injektor (11) sich gerade bis zu der inneren Oberfläche (24) der Sohle (8) gegenüber einer Abdeckschicht aus einer porösen Stampfung (25), die die Innenwand der Sohle weit überdeckt, erstreckt.

10. Lichtbogenofen nach einem der Ansprüche 1 bis 9, dadurch gekennzeichnet, daß der untere Injektor (11) aus vertikalen, nicht porösen Platten (15) eines dichten Feuerfestmaterials, zusammengesetzt ist, die durch Spalte (16) einer Dicke von 0,1 bis 1 mm voneinander getrennt sind, und daß der untere Injektor von einem gasdichten Metallmantel (17) umgeben ist.

11. Lichtbogenofen nach einem der Ansprüche 1 bis 9, dadurch gekennzeichnet, daß der untere Injektor (11) aus einem kompakten Block (20) aus dichtem und nicht porösen feuerfesten Material besteht, der in seiner ganzen Höhe in Gaseinblasrichtung von einer metallischen Hohlröhre (21) bis zu höchstens 50 metallischen Hohlröhren (21) mit einem Querschnitts von 0,12 mm2 bis 500 $mm^2$ durchzogen ist.

12. Lichtbogenofen nach einem der Ansprüche 1 bis 9, dadurch gekennzeichnet, daß der untere Injektor (11) aus einem kompakten Block (18) aus dichtem und nicht porösen feuerfesten Material besteht, in dem in Gaseinblasrichtung zwischen 4 und 50 feine Kanäle (19) mit einem Durchmesser zwischen 0,5 und 3 mm ausgespart sind.

13. Lichtbogenofen nach einem der vorangegangenen Ansprüche, dadurch gekennzeichnet, daß der untere Injektor (11) seitlich mit dem Feuerfestmaterial der Sohle (8) eine Einheit bildet.

14. Verfahren zum Schmelzen von Schrott unter Verwendung einer Inertgasinjektion in das flüssige Metall eines Lichtbogenofens (1), dessen Sohle (8) mindestens eine Inertgasinjektionsvorrichtung (11) zum Durchmischen des flüssigen Metalls umfaßt, dadurch gekennzeichnet, daß das Gas in das flüssige Metall eingebracht wird, indem es durch einen unteren Injektor (11), der in dem Feuerfestmaterial der Sohle (8) eingebracht ist, und dann durch eine poröse Stampfschicht (13) strömt, deren Anfangsdicke zwischen 50 und 300 mm beträgt, die aus feuerfesten, unbearbeiteten Körnern mit einem maximalen Durchmesser von 10 mm besteht, und den Durchlaß des Gases mit einem Versorgungsdruck von höchstens $10 \times 10^5$ Pa (10 bar) bei einem Durchfluß von 20 $Nm^3$/h nach einer Wärmesinterung ermöglicht, und daß der untere Injektor aus einem kompakten Block (15, 18, 20) aus dichtem und nicht porösem, feuerfesten Material gebildet ist, der von einer oder von einer Vielzahl, vorzugsweise weniger als fünfzig, metallischen Hohlröhren, oder Spalten oder Kanälen (30, 16, 19, 21) durchzogen ist, die sich längs seiner ganzen Höhe erstrecken, wobei der Injektor von der porösen Stampfschicht überdeckt ist.

15. Verfahren nach Anspruch 14, dadurch gekennzeichnet, daß das Inertgas aus Argon, und/oder Stickstoff, und/oder Kohlendioxid und/oder Helium, einzeln oder als Gemisch, ausgewählt wird.

16. Verfahren nach einem der Ansprüche 14 oder 15, dadurch gekennzeichnet, daß falls die poröse Stampfmasse (13) verbraucht ist, eine Reparatur der Injektionsvorrichtung durchgeführt wird, indem eine poröse Stampfmasse auf die Injektionsvorrichtung (10) aufgebracht wird, ohne daß der Lichtbogenofen abgeschaltet wird und ohne daß die Ofensohle abkühlt.

17. Verfahren nach Anspruch 14, gekennzeichnet durch das Fehlen des Kontakts eines metallischen Teils der Injektionsvorrichtung (10) mit dem flüssigen Metall während des normalen Betriebs des Lichtbogenofens.

18. Verfahren nach einem der Ansprüche 14 bis 17, dadurch gekennzeichnet, daß eine Unterbrechung und eine Wiederaufnahme der Gasinjektion durch die Injektionsvorrichtung (10) zum Durchmischen des flüssigen Metalls zu jedem Zeitpunkt des normalen Betriebs des Ofens die Injektionsvorrichtung weder verstopft noch beschädigt.

19. Verwendung des Lichtbogenofens nach einem der Ansprüche 1 bis 13 und/oder des Verfahrens nach einem der Ansprüche 14 bis 18 zum Stahlschmelzen.


## Claims

1. Electric arc furnace for melting scrap, of the type comprising a dish (7) lined internally with refractory material (8) known as the furnace bottom, side walls (4), a roof (2) covering the upper opening of the dish and incorporating through-holes for the electrodes (3), an excentric pouring spout or pouring hole (9), said furnace bottom being equipped with at least one gas injecting device (10) for agitating the molten metal, characterised in that said injecting device has a low injector (11) formed by a compact block of dense, non-porous refractory material (15 ; 18 ; 20) through which pass one or a plurality, preferably less than fifty, of hollow metal tubes, or slots, or ducts (30; 16; 19; 21) extending its entire height in the direction of gas blowing and allowing gas to pass through, said low injector being topped by a porous ramming mass (13) with an initial thickness of 50 to 300 mm, composed of unshaped refractory material in the form of grains with a maximum diameter of 10 mm, the granulometry of the porous ramming mixture being such that the porous ramming mass has a permeability of between 100 and 300 nanoperms after high-temperature sintering.

2. Electric furnace according to claim 1, characterised in that the permeability of the porous ramming mass (13) is such that it allows a throughput of at least 20 $Nm^3$/hr per injecting device (10) at a supply pressure of not more than 10 x $10^5$ Pa (10 bars).

3. Electric furnace according to claim 1 or claim 2, wherein the number of injecting devices (10) does not exceed six.

4. Electric furnace according to any of claims 1 to 3, characterised in that the porous ramming mixture (13) is a dry ramming mixture, preferably binder-free, containing 50 to 90 % by weight of magnesium oxide MgO, 5 to 20 % by weight of calcium oxide CaO, 0 to 5 % by weight of aluminium oxide $Al_2O_3$, 0 to 2 % by weight of silica $SiO_2$ and 2 to 7 % by weight of ferric oxide $Fe_2O_3$.

5. Electric furnace according to claim 4, characterised in that the porous ramming mixture contains 70 to 80 % by weight of magnesium oxide MgO, 15 to 20 % by weight of calcium oxide CaO, 0 to 1 % by weight of aluminium oxide $Al_2O_3$, 0 to 1 % by weight of silica $SiO_2$ and 3 to 6 % by weight of ferric oxide $Fe_2O_3$.

6. Electric furnace according to claim 4 or 5, characterised in that the porous ramming mixture (13) has grain sizes distributed as follows:
   - 0 to 0.5 mm : approximately 30 % by weight,
   - 0.5 to 2 mm : approximately 30 % by weight,
   - 2 to 5 mm : approximately 40 % by weight.

7. Electric furnace according to any of claims 1 to 3, characterised in that the porous ramming mixture (13) is composed of at least one refractory material, preferably based on sintered magnesium oxide, and one binder constituted essentially of tar and/or pitch and/or synthetic resin.

8. Electric furnace according to any of the preceding claims, characterised in that the low injector extends at a distance beneath the inside face of the furnace bottom.

9. Electric furnace according to claim 1, characterised in that the low injector (11) extends substantially to the level of the inside face (24) of the bottom (8), facing the lining of porous ramming mixture (25) projecting broadly onto the inner wall of the furnace bottom.

10. Electric furnace according to any of claims 1 to 9, characterised in that the low injector (11) is constituted by an assembly of vertical plates (15) made of dense, non-porous refractory material and separated by slots (16) between 0.1 and 1 mm thick which allow pressurised gas to pass through, the low injector being surrounded by a gas-tight metal jacket (17).

11. Electric furnace according to any of claims 1 to 9, characterised in that the low injector (11) is constituted by a compact block (20) made of dense, non-porous refractory material and over the entire height of which, in the direction of blowing, pass at least one and not more than 50 hollow metal tubes (21) between 0.12 $mm^2$ and 500 $mm^2$ in cross-section.

12. Electric furnace according to any of claims 1 to 9, characterised in that the low injector (11) is constituted by a compact block (18) made of dense, non-porous refractory material and incorporating, in the direction of blowing, between 4 and 50 fine ducts (19) between 0.5 and 3 mm in diameter.

13. Electric furnace according to any of the preceding claims, characterised in that the low injector (11) is laterally integral with the refractory of the bottom (8).

14. Process for melting scrap by injecting inert gas into the molten metal contained in an electric arc furnace (1) whose bottom (8) has at least one inert gas injecting device (11) for agitating the molten metal, characterised in that the gas is passed into the molten metal firstly via a low injector (11) set in the refractory of the bottom (8), then through a layer of porous ramming mixture (13) with an initial thickness of between 50 and 300 mm, composed of unshaped refractory material made up of grains with a maximum diameter of 10 mm and allowing the passage of gas at a supply pressure of not more than $10 \times 10^5$ Pa (10 bars) at a throughput rate of at least 20 $Nm^3/hr$ after high-temperature sintering, and in that the low injector is formed by a compact block of dense, non-porous refractory material (15 ; 18; 20) through which pass one or more hollow metal tubes or slots or ducts (30 ; 16 ; 19; 21) extending its entire height, said injector being topped by the layer of porous ramming mixture.

15. Process according to claim 14, characterised in that the inert gas is one or a mixture of argon and/or nitrogen and/or carbon dioxide and/or helium.

16. Process according to claim 14 or 15, characterised in that when the porous ramming mass (13) is spent, the injecting device can be refurbished by applying porous ramming mixture above the injecting device (10), without shutting down the electric furnace and without allowing the furnace bottom to cool.

17. Process according to claim 14, characterised in that there is no contact between any metal part of the injecting device (10) and the liquid metal when the electric arc furnace is operating normally.

18. Process according to any of claims 14 to 17, characterised in that the injection of gas through the injecting devices (10) in order to agitate the molten metal is stopped and restarted at any time while the furnace is operating normally, without blocking or damaging the gas injecting devices.

19. Use of the furnace according to any of claims 1 to 13 and/or of the process according to any of claims 14 to 18 for melting steel.

FIG.1

EP 0 388 255 B1

FIG.2

FIG 3

FIG.4

FIG.5

12

FIG.6